# EUROPÄISCHE PATENTSCHRIFT

(11) **EP 4 399 271 B1**
(45) Veröffentlichungstag und Bekanntmachung des Hinweises auf die Patenterteilung: **08.10.2025**
(21) Anmeldenummer: 22764677.5
(22) Anmeldetag: 08.08.2022
(51) Int. Cl.: C11D 17/04, B65B 11/50, B29C 51/42, B65B 47/02

(54) **VERFAHREN ZUR HERSTELLUNG VON WASCHMITTELDOSIEREINHEITEN MIT VERBESSERTEN EIGENSCHAFTEN**
METHOD FOR PRODUCING DETERGENT METERING UNITS HAVING IMPROVED PROPERTIES
PROCÉDÉ DE PRODUCTION D'UNITÉS DE DOSAGE DE DÉTERGENT PRÉSENTANT DES PROPRIÉTÉS AMÉLIORÉES

(30) Priorität: 08.09.2021 DE 102021209935
(43) Veröffentlichungstag der Anmeldung: 17.07.2024
(73) Patentinhaber: Henkel AG & Co. KGaA, 40589 Düsseldorf (DE)
(72) Erfinder: SUNDER, Matthias, 40593 Düsseldorf (DE); DÜFFELS, Arno, 40479 Düsseldorf (DE); TREBBE, Uwe, 40547 Düsseldorf (DE); MATZEIT, Niklas, 50126 Bergheim (DE)
(86) Internationale Anmeldenummer: PCT/EP2022/072259
(87) Internationale Veröffentlichungsnummer: WO 2023/036532

(56) Entgegenhaltungen:
- EP-A2- 1 326 787
- EP-A2- 2 298 536
- WO-A1-2008/034624
- WO-A1-2020/152044
- GB-A- 2 475 538

## Beschreibung

Die vorliegende Erfindung Verfahren zur Herstellung einer Waschmittelportionseinheit, in dessen Verlauf wasserlösliche Verpackungsfolien erwärmt und plastisch verformt werden.

An die Konfektions- und Angebotsformen von Wasch- und Reinigungsmittel werden sich kontinuierlich ändernde Anforderungen gestellt. Ein Hauptaugenmerk liegt dabei seit geraumer Zeit auf der bequemen Dosierung von Wasch- und Reinigungsmitteln durch den Verbraucher und der Vereinfachung der zur Durchführung eines Wasch- oder Reinigungsverfahren notwendigen Arbeitsschritte. Eine technische Lösung bieten vorportionierte Wasch- oder Reinigungsmittel, beispielsweise Folienbeutel mit einer oder mehreren Aufnahmekammern für feste oder flüssige Wasch- oder Reinigungsmittel.

Ein für die Herstellung dieser Folienbeutel relevanter Trend, ist die Miniaturisierung dieser Folienbeutel. Hintergrund dieser Entwicklung sind neben einer höheren Verbraucherakzeptanz aufgrund vereinfachter Handhabung insbesondere Nachhaltigkeitsaspekte, beispielsweise in Bezug auf die Menge der eingesetzten Verpackungsmittel.

Die Herstellung der zuvor beschriebenen Folienbeutel erfolgt durch mehrstufige Prozesse, in deren Verlauf wasserlösliche Folienmaterialien beispielsweise mittels durch Einwirkung von Wärme und Unterdruck in Kavitäten eingeformt, befüllt und nachfolgend versiegelt werden. Während die Erwärmung der Folien deren Plastizität erhöht, bewirkt die aus dem an die erwärmte Folie angelegten Unterdruck resultierende Kraft deren Streckung und plastische Verformung. Der Film wird in diesem Verfahren über seine Fläche nicht homogen gestreckt, vielmehr wechseln Bereiche hoher Streckung, beispielsweise im Randbereich der Kavität mit Bereichen geringerer Streckung ab. Aus einem Folienmaterial mit homogener Foliendicke entsteht so eine verformte Folie in Form eines Aufnahmebehälters mit einer heterogenen Foliendickenverteilung. Diese heterogenen Foliendickenverteilung wird umso ausgeprägter ausfallen, je stärker das ursprüngliche Folienmaterial verformt wird. Die Stärke der Verformung nimmt in der Regel beispielsweise mit der Anzahl der in den Aufnahmebehälter eingeformten Aufnahmekammern oder deren Tiefe zu.

Neben anderen Faktoren bestimmen sowohl die Foliendickenverteilung als auch die absolute Foliendicke die haptischen, optischen und mechanischen Eigenschaften des Folienbeutels. Folienbeutel mit großen Unterschieden in der Foliendicke werden häufig als weniger ansprechend wahrgenommen. Folienbeutel mit geringer minimalen Foliendicke verformen sich leichter unter ihrem Eigengewicht als entsprechende Folienbeutel mit höherer Foliendicke und wirken schlaff. Diese Folienbeutel halten mechanischer Belastung in geringerem Maße stand und lösen sich bei Wasserzutritt zu schnell. Die beiden letztgenannten Punkte sind für Folienbeutel nicht nur im Bereich von Herstellung, Transport und Lagerung relevant, sondern haben insbesondere Auswirkungen auf die Produktsicherheit, beispielsweise bei versehentlicher oraler Aufnahme.

In der internationalen Anmeldung WO 2020/152044 A1 wird ein Verfahren zur Herstellung wasserlöslicher Behälter beschrieben, in dessen Verlauf ein wasserlöslicher Film mittels einer zweiteiligen Heizvorrichtung mit heterogenem Temperaturprofil erwärmt und nachfolgend tiefgezogen wird.

Vor diesem technischen Hintergrund lag der Anmeldung die Aufgabe zugrunde, Waschmittelportionseinheiten bereitzustellen, welche bei minimalem Einsatz zur Verpackung eingesetzter Folienmaterialien über eine maximale Stabilität sowie eine ansprechende Optik und Haptik verfügen. Die Waschmittelportionseinheiten sollten zudem in effizienter Weise auch großtechnisch herstellbar sein.

Ein erster Anmeldungsgegenstand ist ein Verfahren zur Herstellung einer Waschmittelportionseinheit mit mindestens einer von einem wasserlöslichen Film umgebenden befüllten Aufnahmekammer, umfassend die Schritte
a) Transport eines ersten wasserlöslichen Films in Richtung einer Heizvorrichtung;
b) In Kontakt bringen des ersten wasserlöslichen Films mit der Heizvorrichtung;
c) Erwärmen des ersten wasserlöslichen Films mittels der Heizvorrichtung;
d) Aufheben des Kontakts zwischen dem ersten wasserlöslichen Film und der Heizvorrichtung;
e) Einformen des ersten erwärmten wasserlöslichen Films in die Kavitäten einer unterhalb des ersten wasserlöslichen Films befindlichen Tiefziehmatrize unter Ausbildung eines Aufnahmebehälters mit mindestens einer Aufnahmekammer;
f) Befüllen der mindestens einen Aufnahmekammer mit einem Waschmittel;
g) gegebenenfalls Verschließen und Vereinzeln der befüllten Aufnahmebehälter unter Ausbildung der Waschmittelportionseinheit;
wobei die Oberfläche der Heizvorrichtung einander benachbarte beheizte Oberflächenbereiche aufweist, die sich in Schritt c) in Kontakt mit Filmabschnitten befinden, welche in Schritt e) unter Ausbildung eines Aufnahmebehälters mit mindestens einer Aufnahmekammer verformt werden, und
- die beheizten Oberflächenbereiche jeweils über mindestens ein separat steuerbares Heizelement erwärmt werden,
- in Schritt b) die Heizvorrichtung in Richtung des wasserlöslichen Films abgesenkt und der wasserlösliche Film durch Einwirkung eines Unterdrucks mit der Heizvorrichtung in Kontakt gebracht und gehalten wird,
- sich der wasserlösliche Film in Schritt c) zwischen der Heizvorrichtung und der in Schritt e) eingesetzten Tiefziehmatrize befindet und der Abstand zwischen der Oberfläche der Heizvorrichtung und der Tiefziehmatrize weniger als 10 mm, beträgt,
- die steuerbaren Heizelemente mindestens zwei einander benachbarter beheizter Oberflächenbereiche in Schritt c) eine Temperaturdifferenz zwischen 10 und 60°C aufweisen,
- die Temperatur der steuerbaren Heizelemente zu einem Zeitpunkt nach dem Erwärmen des wasserlöslichen Films in Schritt c) auf Werte unterhalb der für den Schritt c) vorgesehenen Temperatur abgesenkt wird,
- in Schritt d) der Unterdruck zwischen der Heizvorrichtung und dem wasserlöslichen Film aufgehoben wird und zeitgleich oder nachfolgend die Heizvorrichtung angehoben wird.

Das erfindungsgemäße Verfahren ermöglicht die effiziente Herstellung der Waschmittelportionseinheiten. Die Waschmittelportionseinheiten zeichnen sich aufgrund einer gleichförmigen Dicke des wasserlöslichen Films durch eine hohe mechanische Stabilität bei geringem Verpackungsmitteleinsatz aus.

Im Rahmen des erfindungsgemäßen Verfahrens werden wasserlösliche Filme in einer Tiefziehapparatur umgeformt und mit Waschmittelzubereitungen zu Waschmittelportionseinheiten kombiniert.

Der wasserlösliche Film, in welche die Waschmittelzubereitung verpackt ist, kann ein oder mehrere strukturell verschiedene wasserlösliche(s) Polymer(e) umfassen. Als wasserlösliche(s) Polymer(e) für den ersten wasserlöslichen Film eignen sich insbesondere Polymere aus der Gruppe (gegebenenfalls acetalisierter) Polyvinylalkohole (PVAL) sowie deren Copolymere.

Wasserlösliche Filme zur Herstellung der wasserlöslichen Umhüllung basieren bevorzugt auf einem Polyvinylalkohol oder einem Polyvinylalkoholcopolymer, dessen Molekulargewicht im Bereich von 10.000 bis 1.000.000 gmol⁻¹, vorzugsweise von 20.000 bis 500.000 gmol⁻¹, besonders bevorzugt von 30.000 bis 100.000 gmol⁻¹ und insbesondere von 40.000 bis 80.000 gmol⁻¹ liegt.

Die Herstellung der Polyvinylalkohol und Polyvinylalkoholcopolymere schließt in der Regel die Hydrolyse intermediären Polyvinylacetats ein. Bevorzugte Polyvinylalkohole und Polyvinylalkoholcopolymere weisen einen Hydrolysegrad 70 bis 100 Mol-%, vorzugsweise 80 bis 90 Mol-%, besonders bevorzugt 81 bis 89 Mol-% und insbesondere 82 bis 88 Mol-% auf.

Bevorzugte Polyvinylalkoholcopolymere umfassen neben Vinylalkohol eine ethylenisch ungesättigte Carbonsäure, deren Salz oder deren Ester. Besonders bevorzugt enthalten solche Polyvinylalkoholcopolymere neben Vinylalkohol Sulfonsäuren wie die 2-Acrylamido-2-methyl-1-propansulfonsäure (AMPS), Acrylsäure, Methacrylsäure, Acrylsäureester, Methacrylsäureester oder Mischungen daraus; unter den Estern sind C₁₋₄-Alkylester oder - Hydroxyalkylester bevorzugt. Als weitere Monomere kommen ethylenisch ungesättigte Dicarbonsäuren, beispielsweise Itaconsäure, Maleinsäure, Fumarsäure und Mischungen daraus in Betracht.

Geeignete wasserlösliche Folien zum Einsatz in den Umhüllungen der wasserlöslichen Verpackungen gemäß der Erfindung sind Folien, die von der Firma MonoSol LLC beispielsweise unter der Bezeichnung M8630, M8720, M8310, C8400 oder M8900 vertrieben werden. Andere geeignete Folien umfassen Folien mit der Bezeichnung Solublon^{®} PT, Solublon^{®} GA, Solublon^{®} KC oder Solublon^{®} KL von der Aicello Chemical Europe GmbH oder die Folien VF-HP von Kuraray.

Der erste wasserlösliche Film weist vorzugsweise eine Dicke von 10 bis 90µm, bevorzugt von 30 bis 60 µm auf.

Die wasserlöslichen Filme können als weitere Inhaltsstoffe zusätzliche Wirk- oder Füllstoffe aber auch Weichmacher und/oder Lösungsmittel, insbesondere Wasser, enthalten.

Zur Gruppe der weiteren Wirkstoffe zählen dabei beispielsweise Materialien, welche die von dem Folienmaterial umschlossenen Inhaltsstoffe des Waschmittels vor Zersetzung oder Desaktivierung durch Lichteinstrahlung schützen. Als besonders geeignet haben sich hier Antioxidantien, UV-Absorber und Fluoreszenzfarbstoffe erwiesen.

Als Weichmacher können beispielsweise Glycerin, Ethylenglycol, Diethylenglycol, Propandiol, 2-Methyl-1,3-propandiol, Sorbit oder deren Gemische eingesetzt werden.

Zur Verminderung ihrer Reibungskoeffizienten kann die Oberfläche des wasserlöslichen Films der Waschmittelportionseinheit optional mit feinem Pulver abgepudert werden. Natriumaluminosilicat, Siliciumdioxid, Talk und Amylose sind Beispiele für geeignete Pudermittel.

Die in dem Verfahren eingesetzte Tiefziehapparatur kann kontinuierlich oder diskontinuierlich betrieben werden. Zur Erhöhung der Verfahrenseffizienz ist eine kontinuierliche Verfahrensweise bevorzugt. In einer besonders bevorzugten Ausführungsform des Verfahrens erfolgt der Transport des ersten wasserlöslichen Films in Schritt a) kontinuierlich. Im Hinblick auf die Verfahrensökonomie und Verfahrenssicherheit ist es bevorzugt, den ersten wasserlöslichen Film in Schritt a) mit einer Geschwindigkeit 0,04 m/s, vorzugsweise oberhalb 0,08 m/s zu transportieren.

In Schritt b) des Verfahrens wird der erste wasserlösliche Film mit der Heizvorrichtung in Kontakt gebracht. Kennzeichnend für diese Heizvorrichtung ist die heterogene Temperaturverteilung ihrer Oberfläche, welche dadurch erzielt wird, dass die Oberfläche der Heizvorrichtung einander benachbarte beheizte Oberflächenbereiche aufweist, die sich in Schritt c) in Kontakt mit Filmabschnitten befinden, welche in Schritt e) verformt werden, wobei die beheizten Oberflächenbereiche jeweils über mindestens ein separat steuerbares Heizelement erwärmt werden und die steuerbaren Heizelemente mindestens zwei einander benachbarter beheizter Oberflächenbereiche in Schritt c) eine Temperaturdifferenz zwischen 10 und 60°C aufweisen.

Die Heizvorrichtung dient der Erwärmung des wasserlöslichen Films in Schritt c) des Verfahrens. Die Wärmeübertragung erfolgt dabei zumindest anteilsweise durch direkten Kontakt zwischen einer Oberfläche der Heizvorrichtung und dem wasserlöslichen Film. Die für die Wärmeübertragung maßgebliche Oberfläche der Heizvorrichtung weist beheizte Oberflächenbereiche auf. Als ein beheizter Oberflächenbereich wird ein Bereich der Oberfläche der Heizvorrichtung aufgefasst, welcher mittels eines oder mehrerer separat steuerbarer Heizelemente erwärmt wird, wobei diese steuerbaren Heizelemente eine vergleichbare Temperatur aufweisen. Zwei Temperaturen sind vergleichbar, wenn sie um weniger als 10°C, vorzugsweise weniger als 8°C differieren. Bevorzugte beheizte Oberflächenbereich der Heizvorrichtung weisen 1 bis 8, vorzugsweise 1 bis 6, insbesondere 1 bis 4 separat steuerbare Heizelemente auf. Sofern ein beheizter Oberflächenbereich mehr als ein separat steuerbares Heizelement aufweist, beträgt die Temperaturdifferenz der separat steuerbaren Heizelemente des beheizten Oberflächenbereichs in Schritt c) besonders bevorzugt weniger als 5°C und insbesondere weniger als 2°C. Ganz besonders bevorzugt ist es, wenn die separat steuerbaren Heizelemente jedes beheizten Oberflächenbereichs in Schritt c) eine identische Temperatur aufweisen. Die Temperatur der Heizelemente wird in einer für den Fachmann bekannten Weise über die Steuerung der Heizelemente festgesetzt. Dabei kann die Temperatur jedes einzelnen separat steuerbaren Heizelements im Laufe des Verfahrens variieren. Erfindungsgemäß wird die über die Steuerung festgelegte Temperatur des Heizelements zu einem Zeitpunkt nach dem Erwärmen des wasserlöslichen Films in Schritt c) auf Werte unterhalb der für den Schritt c) vorgesehenen Temperaturen abgesenkt. Eine entsprechende Temperaturabsenkung, beispielsweise auf 60% bis 90%, vorzugsweise auf 73% bis 83% der für den Schritt c) vorgesehenen Temperatur, unterstützt die Ausbildung eines konstant heterogenen Temperaturprofils der Oberfläche der Heizvorrichtung.

Die Heizvorrichtung verfügt neben den separat steuerbaren Heizelementen vorzugsweise weiterhin über eine Kühlung. Diese Kühlung ist vorzugsweise derart ausgestaltet, dass sie eine Absenkung der Temperaturen der Heizvorrichtungsoberfläche ermöglicht. Auch diese Kühlung unterstützt die Ausbildung eines konstant heterogenen Temperaturprofils der Oberfläche der Heizvorrichtung.

Wie eingangs beschrieben, weisen die steuerbaren Heizelemente mindestens zwei einander benachbarter beheizter Oberflächenbereiche in Schritt c) eine Temperaturdifferenz zwischen 10 und 60°C auf. Das aus dieser Temperaturdifferenz resultierende heterogene Temperaturprofil ermöglicht die Herstellung von Aufnahmebehältern mit anspruchsvollen Geometrien bei gleichzeitig homogener Filmdickenverteilung. Während Temperaturdifferenzen unterhalb 10°C weniger geeignet sind, diese vorteilhaften Produkteigenschaften zu realisieren, sind Temperaturdifferenzen oberhalb 60°C verfahrenstechnisch nur mit großem Aufwand in ökonomischer Weise nutzbar, da mit steigender Temperaturdifferenz beispielsweise die Anforderungen an die Kühlung und die exakte Einhaltung der Kontaktzeiten zwischen Heizvorrichtung und wasserlöslichem Film zunehmen.

Selbstverständlich lässt sich die Temperaturdifferenz von 10 bis 60°C zwischen mehr als zwei benachbarten beheizten Oberflächenbereichen realisieren. Aufgrund der erzielten technischen Vorteile weisen in bevorzugten Verfahrensvarianten die steuerbaren Heizelemente von mindestens 60%, vorzugsweise von mindestens 80% und insbesondere aller einander benachbarten beheizten Oberflächenbereiche, welche sich in Schritt c) in Kontakt mit Filmabschnitten befinden, die in Schritt e) verformt werden, zu den steuerbaren Heizelementen mindestens eines benachbarten beheizten Oberflächenbereichs in Schritt c) eine Temperaturdifferenz zwischen 10 und 60°C auf.

Der Verfahrensverlauf und das Verfahrensergebnis wird neben den relativen Temperaturdifferenzen einander benachbarter Heizelemente weiterhin durch deren absolute Temperatur beeinflusst. Als technisch vorteilhaft haben sich insbesondere solche Verfahrensvarianten erwiesen, bei denen die steuerbaren Heizelemente der beheizten Oberflächenbereiche der Heizvorrichtung in Schritt c) eine Temperatur im Bereich von 40 bis 150°C, vorzugsweise von 60 bis 135°C aufweisen.

Der wasserlösliche Film wird in Schritt b) mit der Heizvorrichtung in Kontakt gebracht und in Schritt e) unter Ausbildung eines Aufnahmebehälters mit mindestens einer Aufnahmekammer verformt. Einander benachbarte Abschnitte des wasserlöslichen Films bilden dabei den Boden oder die Seitenwände der Aufnahmekammer, oder den die Aufnahmekammer umgebenden Rand oder Steg und werden folglich in unterschiedlicher Weise gedehnt. Zur Angleichung der Dehnfaktoren der unterschiedlichen Abschnitte des den Aufnahmebehälter ausbildenden wasserlöslichen Films hat es sich insbesondere bei Einsatz von Polyvinylalkohol basierten Filmen als vorteilhaft erwiesen, wenn die steuerbaren Heizelemente der Heizvorrichtung in den Bereichen, in welchen in Schritt c) der Flächenabschnitt des wasserlöslichen Films erwärmt wird, welcher den Randbereich der Aufnahmekammer(n) des Aufnahmebehälters bildet, in Schritt c) eine Temperatur im Bereich von 100 bis 150°C, vorzugsweise von 110 bis 135°C aufweisen. Aus den gleichen Gründen ist es bevorzugt, dass die steuerbaren Heizelemente der Heizvorrichtung in den Bereichen, in welchen in Schritt c) der Flächenabschnitt des wasserlöslichen Films erwärmt wird, welcher den Bodenbereich der Aufnahmekammer(n) des Aufnahmebehälters bildet, in Schritt c) eine Temperatur im Bereich von 50 bis 90°C, vorzugsweise von 60 bis 85°C aufweisen.

Die Dichte separat steuerbarer Heizelemente in den in Schritt b) beheizbaren Oberflächenbereichen der Heizvorrichtung beträgt vorzugsweise 4 und 64 cm⁻², bevorzugt 8 und 32 pro cm⁻². Gleichzeitig ist es bevorzugt, wenn die beheizte Oberfläche der Heizvorrichtung, welche sich in Schritt c) in Kontakt mit Filmabschnitten befindet eine Dichte beheizter Oberflächenbereiche oberhalb 1,2 pro cm², vorzugsweise oberhalb 1,5 pro cm² und insbesondere zwischen 1,7 und 4,2 pro cm² aufweist. Unterschiedliche Dichten von Heizelementen und beheizten Oberflächenbereichen ergeben sich in all den Fällen, in denen ein beheizter Oberflächenbereich mehr als ein separat steuerbares Heizelement aufweist. Die oben genannten Dichten an steuerbaren Heizelementen und beheizten Oberflächenbereichen haben sich für die Verarbeitung von wasserlöslichen Filmen zu Waschmittelportionseinheiten als besonders gut geeignet erwiesen.

Die Heizrate der separaten Heizelemente beträgt vorzugsweise 5 bis 70 K/s, bevorzugt von 10 bis 50 K/s.

Die Oberfläche der Heizvorrichtung mit welcher der wasserlösliche Film in Schritt b) in Kontakt gebracht wird, ist vorzugsweise plan. Besonders bevorzugte Materialien zur Fertigung der Oberfläche, mit welcher der wasserlösliche Film in Schritt b) in Kontakt steht sind Keramik oder Metall, insbesondere Stahl.

In einer bevorzugten Verfahrensvariante wird der erste wasserlöslichen Film in Schritt b) nur an einer Seite mit der Heizvorrichtung in Kontakt gebracht. Dieses Vorgehen hat sich insbesondere auch wegen der ausgeprägten Temperaturdifferenzen der beheizten Oberflächenbereiche als ausreichend erwiesen. Im Vergleich zu Verfahren unter Einsatz von zwei Heizvorrichtungen ist das erfindungsgemäße Verfahren damit nicht nur mit einem geringeren apparativen Aufwand verbunden, es ermöglicht zudem eine kompakteres Design der Produktionsstraße.

Bevorzugt wird in Schritt b) die Oberseite des wasserlöslichen Films mit der Heizvorrichtung in Kontakt gebracht. Als Oberseite wird dabei die räumlich noch oben orientierte Seite des Films bezeichnet.

In einer bevorzugten Ausführungsform wird die Heizvorrichtung in Schritt b) in Richtung des wasserlöslichen Films abgesenkt.

Zur Verringerung der Prozessdauer und zur Sicherstellung eines reproduzierbaren Kontakts zwischen dem ersten wasserlöslichen Film und der Oberfläche der Heizvorrichtung wird der wasserlösliche Film in Schritt b) mittels eines Unterdrucks mit der Heizvorrichtung in Kontakt gebracht. Weiterhin ist es erfindungsgemäß, den Kontakt zwischen dem wasserlöslichen Film und der Heizvorrichtung durch Beibehaltung eines Unterdrucks aufrecht zu erhalten. Die Höhe eines entsprechenden Unterdrucks, welcher in Schritt b) zwischen Heizvorrichtung und wasserlöslichem Film aufgebaut wird, beträgt vorzugsweise 200 bis 800 mBar und insbesondere 400 bis 700 mBar.

In Schritt c) wird der wasserlösliche Film vorzugsweise für einen Zeitraum von 0,5 bis 7 Sekunden, bevorzugt von 1 bis 6 Sekunden und insbesondere von 2 bis 5 Sekunden erwärmt.

Zur Steigerung der Verfahrenseffizienz hat es sich als konstruktiv vorteilhaft erwiesen, dass sich erfindungsgemäß der wasserlösliche Film in Schritt c) zwischen der Heizvorrichtung und der in Schritt e) eingesetzten Tiefziehmatrize befindet und der Abstand zwischen der Oberfläche der Heizvorrichtung und der Tiefziehmatrize weniger als 10 mm, vorzugsweise weniger als 5 mm und insbesondere zwischen 0,1 und 2 mm, besonders bevorzugt zwischen 0,2 und 1 mm beträgt.

In Schritt d) wird der Kontakt zwischen dem ersten wasserlöslichen Film und der Oberfläche der Heizvorrichtung aufgehoben. Hierzu wird der zwischen der Heizvorrichtung und dem wasserlöslichen Film wirkende Unterdruck beseitigt. Erfindungsgemäß wird in Schritt d) ein zuvor zwischen der Heizvorrichtung und dem wasserlöslichen Film erzeugter Unterdruck beseitigt und zeitgleich oder nachfolgend die Heizvorrichtung angehoben.

Der wasserlösliche Film weist zu Beginn von Schritt e) vorzugsweise eine Temperatur oberhalb seiner Glasübergangstemperatur auf.

In Schritt e) wird der wasserlösliche Film in die Kavität einer Tiefziehmatrize eingeformt. Hierzu wird vorzugsweise für die Dauer von 0,5 bis 7 Sekunden bevorzugt von 1 bis 5 Sekunden ein Unterdruck zwischen dem wasserlöslichen Film und der Tiefziehmatrize aufgebaut. Dieser zwischen dem wasserlöslichen Film und der Tiefziehmatrize erzeugte Unterdruck beträgt vorzugsweise 100 bis 600 mBar und insbesondere 200 bis 400 mBar.

Bei der Einformung in die Kavität der Tiefziehmatrize wird die Oberfläche des wasserlöslichen Films vorzugsweis um mindestens 80%, vorzugsweise um mindestens 120%, insbesondere um 120 bis 300% vergrößert. Gleichzeitig beträgt der maximale lokale Streckfaktor des wasserlöslichen Films im Anschluss an Schritt e) vorzugsweise 2 bis 4 und insbesondere 2 bis 3.

Bevorzugt ist es insbesondere, wenn der wasserlösliche Film in Schritt e) unter Ausbildung eines Aufnahmebehälters mit mindestens zwei, vorzugsweise mindestens drei und insbesondere mindestens vier Aufnahmekammern eingeformt wird.

Das Füllvolumen des Aufnahmebehälter in Schritt e) beträgt vorzugsweise Füllvolumen von 1 bis 50 ml, bevorzugt von 10 bis 40 ml und insbesondere von 13 bis 25 ml.

In bevorzugten Verfahrensvarianten, bei denen der Aufnahmebehälter mindestens zwei, vorzugsweise mindestens drei und insbesondere mindestens vier Aufnahmekammern aufweist, beträgt das Verhältnis des Volumens der größten Aufnahmekammer zum Volumen der kleinsten Aufnahmekammer 4:1 bis 1:1, vorzugsweise 3:1 bis 1:1 beträgt.

Aus Gründen der Prozesseffizienz ist das erfindungsgemäße Verfahren derart ausgestaltet, dass in einem Verfahrensdurchlauf nicht lediglich eine einzige Waschmittelportionseinheit, sondern parallel eine Mehrzahl von Waschmittelportionseinheiten hergestellt wird. Vorzugsweise wird in Schritt e) ein Flächengebilde mit mindestens 14, vorzugsweise mindestens 20 Aufnahmebehältern ausgebildet.

In diesem Flächengebilde sind die Aufnahmebehälter vorzugsweise in Reihen angeordnet. Im Hinblick auf die nachfolgende Befüllung sind die in Schritt e) ausgebildeten Flächengebilde Reihen von Aufnahmebehältern auf welche orthogonal zur Transportrichtung des wasserlöslichen Films angeordnet sind.

In einer alternativen Ausführungsform wird in Schritt e) ein Flächengebilde ausgebildet, in welchem die Aufnahmebehälter in Reihen angeordnet sind, welche orthogonal zur Transportrichtung des wasserlöslichen Films verlaufen und zueinander jeweils um ein Drittel der Breite eines Aufnahmebehälters, vorzugsweise um die Hälfte der Breite eines Aufnahmebehälters versetzt sind. In dem Flächengebilde sind die Aufnahmebehälter vorzugsweise derart angeordnet, dass jeder Aufnahmebehälter mindestens einem Zwischenbereich benachbart ist, welcher seinerseits von drei Aufnahmebehältern umgeben ist.

Die mindestens eine Aufnahmekammer des Aufnahmebehälters wird in Schritt f) befüllt. Zur Befüllung eignen sich feste und flüssige Wasch- oder Reinigungsmittel.

Insbesondere in Fällen, in denen die eingefüllten Wasch- oder Reinigungsmittel nicht haftend mit dem wasserlöslichen Filmmaterial verbunden sind, wie dies beispielsweise bei Schmelzen der Fall sein kann, wird die befüllte Aufnahmekammer des Aufnahmebehälters verschlossen. Entsprechende Verfahren, in deren Verlauf die Aufnahmekammer des Aufnahmebehälters in einem weiteren Schritt f) befüllt und die befüllte Aufnahmekammer in einem nachfolgenden Schritt g) mittels eines zweiten wasserlöslichen Films verschlossen wird, sind im Hinblick auf die Produktästhetik und -handhabbarkeit bevorzugt.

Die folgenden Ausführungsformen der Erfindung werden offenbart:
1. Verfahren zur Herstellung einer Waschmittelportionseinheit mit mindestens einer von einem wasserlöslichen Film umgebenden befüllten Aufnahmekammer, umfassend die Schritte
   a) Transport eines ersten wasserlöslichen Films in Richtung einer Heizvorrichtung;
   b) In Kontakt bringen des ersten wasserlöslichen Films mit der Heizvorrichtung;
   c) Erwärmen des ersten wasserlöslichen Films mittels der Heizvorrichtung;
   d) Aufheben des Kontakts zwischen dem ersten wasserlöslichen Film und der Heizvorrichtung;
   e) Einformen des ersten erwärmten wasserlöslichen Films in die Kavitäten einer unterhalb des ersten wasserlöslichen Films befindlichen Tiefziehmatrize unter Ausbildung eines Aufnahmebehälters mit mindestens einer Aufnahmekammer;
   f) Befüllen der mindestens einen Aufnahmekammer mit einem Waschmittel;
   g) gegebenenfalls Verschließen und Vereinzeln der befüllten Aufnahmebehälter unter Ausbildung der Waschmittelportionseinheit;
   wobei die Oberfläche der Heizvorrichtung einander benachbarte beheizte Oberflächenbereiche aufweist, die sich in Schritt c) in Kontakt mit Filmabschnitten befinden, welche in Schritt e) unter Ausbildung eines Aufnahmebehälters mit mindestens einer Aufnahmekammer verformt werden, und
   - die beheizten Oberflächenbereiche jeweils über mindestens ein separat steuerbares Heizelement erwärmt werden,
   - in Schritt b) die Heizvorrichtung in Richtung des wasserlöslichen Films abgesenkt und der wasserlösliche Film durch Einwirkung eines Unterdrucks mit der Heizvorrichtung in Kontakt gebracht und gehalten wird,
   - sich der wasserlösliche Film in Schritt c) zwischen der Heizvorrichtung und der in Schritt e) eingesetzten Tiefziehmatrize befindet und der Abstand zwischen der Oberfläche der Heizvorrichtung und der Tiefziehmatrize weniger als 10 mm, beträgt,
   - die steuerbaren Heizelemente mindestens zwei einander benachbarter beheizter Oberflächenbereiche in Schritt c) eine Temperaturdifferenz zwischen 10 und 60°C aufweisen,
   - die Temperatur der steuerbaren Heizelemente zu einem Zeitpunkt nach dem Erwärmen des wasserlöslichen Films in Schritt c) auf Werte unterhalb der für den Schritt c) vorgesehenen Temperatur abgesenkt wird,
   - in Schritt d) der Unterdruck zwischen der Heizvorrichtung und dem wasserlöslichen Film aufgehoben wird und zeitgleich oder nachfolgend die Heizvorrichtung angehoben wird.
2. Verfahren nach Ausführungsform 1, wobei der erste wasserlösliche Film Polyvinylalkohol oder Polyvinylalkoholcopolymere umfasst.
3. Verfahren nach einer der vorhergehenden Ausführungsformen, wobei in Schritt, wobei der erste wasserlösliche Film eine Dicke von 10 bis 90µm, vorzugsweise von 30 bis 60 µm aufweist.
4. Verfahren nach einer der vorhergehenden Ausführungsformen, wobei der Transport des ersten wasserlöslichen Films in Schritt a) kontinuierlich erfolgt.
5. Verfahren nach einer der vorhergehenden Ausführungsformen, wobei der Transport des ersten wasserlöslichen Films in Schritt a) mit einer Geschwindigkeit 0,04 m/s, vorzugsweise oberhalb 0,08 m/s erfolgt.
6. Verfahren nach einer der vorhergehenden Ausführungsformen, wobei jeder beheizte Oberflächenbereich der Heizvorrichtung 1 bis 8, vorzugsweise 1 bis 6, insbesondere 1 bis 4 separat steuerbare Heizelemente aufweist.
7. Verfahren nach einer der vorhergehenden Ausführungsformen, wobei die separat steuerbaren Heizelemente jedes beheizten Oberflächenbereichs zueinander in Schritt c) eine Temperaturdifferenz unterhalb 5°C, vorzugsweise unterhalb 2°C aufweisen.
8. Verfahren nach einer der vorhergehenden Ausführungsformen, wobei die separat steuerbaren Heizelemente jedes beheizten Oberflächenbereichs in Schritt c) eine identische Temperatur aufweisen.
9. Verfahren nach einer der vorhergehenden Ausführungsformen, wobei die steuerbaren Heizelemente von mindestens 60%, vorzugsweise von mindestens 80% und insbesondere aller einander benachbarten beheizten Oberflächenbereiche, welche sich in Schritt c) in Kontakt mit Filmabschnitten befinden, die in Schritt e) verformt werden, zu den steuerbaren Heizelementen mindestens eines benachbarten beheizten Oberflächenbereichs in Schritt c) eine Temperaturdifferenz zwischen 10 und 60°C aufweisen.
10. Verfahren nach einer der vorhergehenden Ausführungsformen, wobei die steuerbaren Heizelemente der beheizten Oberflächenbereiche der Heizvorrichtung in Schritt c) eine Temperatur im Bereich von 40 bis 150°C, vorzugsweise von 60 bis 135°C aufweisen.
11. Verfahren nach einer der vorhergehenden Ausführungsformen, wobei die steuerbaren Heizelemente der Heizvorrichtung in den Bereichen, in welchen in Schritt c) der Flächenabschnitt des wasserlöslichen Films erwärmt wird, welcher den Randbereich der Aufnahmekammer(n) des Aufnahmebehälters bildet, in Schritt c) eine Temperatur im Bereich von 100 bis 150°C, vorzugsweise von 110 bis 135°C aufweist.
12. Verfahren nach einer der vorhergehenden Ausführungsformen, wobei die steuerbaren Heizelemente der Heizvorrichtung in den Bereichen, in welchen in Schritt c) der Flächenabschnitt des wasserlöslichen Films erwärmt wird, welcher den Bodenbereich der Aufnahmekammer(n) des Aufnahmebehälters bildet, in Schritt c) eine Temperatur im Bereich von 50 bis 90°C, vorzugsweise von 60 bis 85°C aufweist.
13. Verfahren nach einer der vorhergehenden Ausführungsformen, wobei die Heizvorrichtung in Schritt b) beheizbare Oberflächenbereiche mit einer Dichte separat steuerbarer Heizelemente von 4 und 64 cm⁻², bevorzugt von 8 und 32 pro cm⁻² aufweist.
14. Verfahren nach einer der vorhergehenden Ausführungsformen, wobei die beheizte Oberfläche der Heizvorrichtung, welche sich in Schritt c) in Kontakt mit Filmabschnitten befindet eine Dichte beheizter Oberflächenbereiche oberhalb 1,2 pro cm², vorzugsweise oberhalb 1,5 pro cm² und insbesondere von 1,7 und 4,2 pro cm² aufweist.
15. Verfahren nach einer der vorhergehenden Ausführungsformen, wobei die Heizelemente der Heizvorrichtung eine Heizrate von 5 bis 70 K/s, vorzugsweise von 10 bis 50 K/s aufweisen.
16. Verfahren nach einer der vorhergehenden Ausführungsformen, wobei die Heizvorrichtung in Schritt b) eine plane Oberfläche aufweist.
17. Verfahren nach einer der vorhergehenden Ausführungsformen, wobei die Heizvorrichtung in Schritt b) über eine Keramikoberfläche mit dem wasserlöslichen Film in Kontakt steht.
18. Verfahren nach einer der vorhergehenden Ausführungsformen, wobei die Heizvorrichtung in Schritt b) über eine Metalloberfläche mit dem wasserlöslichen Film in Kontakt steht.
19. Verfahren nach einer der vorhergehenden Ausführungsformen, wobei der erste wasserlösliche Film in Schritt b) nur an einer Seite mit der Heizvorrichtung in Kontakt gebracht wird.
20. Verfahren nach einer der vorhergehenden Ausführungsformen, wobei in Schritt b) die Oberseite des wasserlöslichen Films mit der Heizvorrichtung in Kontakt gebracht wird.
21. Verfahren nach einer der vorhergehenden Ausführungsformen, wobei in Schritt b) zwischen Heizvorrichtung und wasserlöslichem Film ein Druck von 200 bis 800 mBar, vorzugsweise von 400 bis 700 mBar aufgebaut wird.
22. Verfahren nach einer der vorhergehenden Ausführungsformen, wobei der wasserlösliche Film in Schritt c) über einen Zeitraum von 0,5 bis 7 Sekunden, vorzugsweise von 1 bis 6 Sekunden und insbesondere von 2 bis 5 Sekunden erwärmt wird.
23. Verfahren nach einer der vorhergehenden Ausführungsformen, wobei sich der wasserlösliche Film in Schritt c) zwischen der Heizvorrichtung und der in Schritt e) eingesetzten Tiefziehmatrize befindet und der Abstand zwischen der Oberfläche der Heizvorrichtung und der Tiefziehmatrize weniger als 5 mm und insbesondere zwischen 0,1 und 2 mm, besonders bevorzugt zwischen 0,2 und 1 mm beträgt.
24. Verfahren nach einer der vorhergehenden Ausführungsformen, wobei in Schritt e) für eine Dauer von 0,5 bis 7 Sekunden vorzugsweise von 1 bis 5 Sekunden ein Unterdruck zwischen dem wasserlöslichen Film und der Tiefziehmatrize aufgebaut wird.
25. Verfahren nach einer der vorhergehenden Ausführungsformen, wobei in Schritt e) zwischen dem wasserlöslichen Film und der Tiefziehmatrize ein Druck von 100 bis 600 mBar, vorzugsweise von 200 bis 400 mBar aufgebaut wird.
26. Verfahren nach einer der vorhergehenden Ausführungsformen, wobei der wasserlösliche Film zu Beginn von Schritt e) auf Temperaturen oberhalb seiner Glasübergangstemperatur erwärmt ist.
27. Verfahren nach einer der vorhergehenden Ausführungsformen, wobei in Schritt e) die Oberfläche des wasserlöslichen Films um mindestens 80%, vorzugsweise um mindestens 120%, insbesondere um 120 bis 300% vergrößert wird.
28. Verfahren nach einer der vorhergehenden Ausführungsformen, wobei der wasserlösliche Film im Anschluss an den Schritt e) einen maximalen lokalen Streckfaktor von 2 bis 4, vorzugsweise von 2 bis 3 aufweist.
29. Verfahren nach einer der vorhergehenden Ausführungsformen, wobei der wasserlösliche Film in Schritt e) unter Ausbildung eines Aufnahmebehälters mit mindestens zwei, vorzugsweise mindestens drei und insbesondere mindestens vier Aufnahmekammern eingeformt wird.
30. Verfahren nach einer der vorhergehenden Ausführungsformen, wobei der Aufnahmebehälter in Schritt e) ein Füllvolumen von 1 bis 50 ml, vorzugsweise von 10 bis 40 ml und insbesondere von 13 bis 25 ml aufweist.
31. Verfahren nach einer der vorhergehenden Ausführungsformen, wobei der Aufnahmebehälter mindestens zwei, vorzugsweise mindestens drei und insbesondere mindestens vier Aufnahmekammern aufweist und das Verhältnis des Volumens der größten Aufnahmekammer zum Volumen der kleinsten Aufnahmekammer 4:1 bis 1:1, vorzugsweise 3:1 bis 1:1 beträgt.
32. Verfahren nach einer der vorhergehenden Ausführungsformen, wobei in Schritt e) ein Flächengebilde mit mindestens 14, vorzugsweise mindestens 20 Aufnahmebehältern ausgebildet wird.
33. Verfahren nach einer der vorhergehenden Ausführungsformen, wobei in Schritt e) ein Flächengebilde ausgebildet wird, in welchem die Aufnahmebehälter in Reihen angeordnet sind.
34. Verfahren nach einer der vorhergehenden Ausführungsformen, wobei in Schritt e) ein Flächengebilde ausgebildet wird, in welchem die Aufnahmebehälter in Reihen angeordnet sind, welche orthogonal zur Transportrichtung des wasserlöslichen Films verlaufen.
35. Verfahren nach einer der vorhergehenden Ausführungsformen, wobei in Schritt e) ein Flächengebilde ausgebildet wird, in welchem die Aufnahmebehälter in Reihen angeordnet sind, welche orthogonal zur Transportrichtung des wasserlöslichen Films verlaufen und zueinander jeweils um ein Drittel der Breite eines Aufnahmebehälters, vorzugsweise um die Hälfte der Breite eines Aufnahmebehälters versetzt sind.
36. Verfahren nach einer der vorhergehenden Ausführungsformen, wobei in Schritt e) ein Flächengebilde ausgebildet wird, in welchem jeder Aufnahmebehälter mindestens einem Zwischenbereich benachbart ist, welcher seinerseits von drei Aufnahmebehältern umgeben ist.
37. Verfahren nach einer der vorhergehenden Ausführungsformen, wobei die Aufnahmekammer des Aufnahmebehälters in einem weiteren Schritt f) befüllt und die befüllte Aufnahmekammer in einem nachfolgenden Schritt g) mittels eines zweiten wasserlöslichen Films verschlossen wird.

## Patentansprüche

1. Verfahren zur Herstellung einer Waschmittelportionseinheit mit mindestens einer von einem wasserlöslichen Film umgebenden befüllten Aufnahmekammer, umfassend die Schritte
a) Transport eines ersten wasserlöslichen Films in Richtung einer Heizvorrichtung;
b) In Kontakt bringen des ersten wasserlöslichen Films mit der Heizvorrichtung;
c) Erwärmen des ersten wasserlöslichen Films mittels der Heizvorrichtung;
d) Aufheben des Kontakts zwischen dem ersten wasserlöslichen Film und der Heizvorrichtung;
e) Einformen des ersten erwärmten wasserlöslichen Films in die Kavitäten einer unterhalb des ersten wasserlöslichen Films befindlichen Tiefziehmatrize unter Ausbildung eines Aufnahmebehälters mit mindestens einer Aufnahmekammer;
f) Befüllen der mindestens einen Aufnahmekammer mit einem Waschmittel;
g) gegebenenfalls Verschließen und Vereinzeln der befüllten Aufnahmebehälter unter Ausbildung der Waschmittelportionseinheit;
wobei die Oberfläche der Heizvorrichtung einander benachbarte beheizte Oberflächenbereiche aufweist, die sich in Schritt c) in Kontakt mit Filmabschnitten befinden, welche in Schritt e) unter Ausbildung eines Aufnahmebehälters mit mindestens einer Aufnahmekammer verformt werden, und
- die beheizten Oberflächenbereiche jeweils über mindestens ein separat steuerbares Heizelement erwärmt werden,
- in Schritt b) die Heizvorrichtung in Richtung des wasserlöslichen Films abgesenkt und der wasserlösliche Film durch Einwirkung eines Unterdrucks mit der Heizvorrichtung in Kontakt gebracht und gehalten wird,
- sich der wasserlösliche Film in Schritt c) zwischen der Heizvorrichtung und der in Schritt e) eingesetzten Tiefziehmatrize befindet und der Abstand zwischen der Oberfläche der Heizvorrichtung und der Tiefziehmatrize weniger als 10 mm, beträgt,
- die steuerbaren Heizelemente mindestens zwei einander benachbarter beheizter Oberflächenbereiche in Schritt c) eine Temperaturdifferenz zwischen 10 und 60°C aufweisen.
- die Temperatur der steuerbaren Heizelemente zu einem Zeitpunkt nach dem Erwärmen des wasserlöslichen Films in Schritt c) auf Werte unterhalb der für den Schritt c) vorgesehenen Temperatur abgesenkt wird,
- in Schritt d) der Unterdruck zwischen der Heizvorrichtung und dem wasserlöslichen Film aufgehoben wird und zeitgleich oder nachfolgend die Heizvorrichtung angehoben wird.

2. Verfahren nach Anspruch 1, wobei jeder beheizte Oberflächenbereich der Heizvorrichtung 1 bis 8, vorzugsweise 1 bis 6, insbesondere 1 bis 4 separat steuerbare Heizelemente aufweist.

3. Verfahren nach einem der vorherigen Ansprüche, wobei die separat steuerbaren Heizelemente jedes beheizten Oberflächenbereichs zueinander in Schritt c) eine Temperaturdifferenz unterhalb 5°C, vorzugsweise unterhalb 2°C aufweisen.

4. Verfahren nach einem der vorherigen Ansprüche, wobei die steuerbaren Heizelemente von mindestens 60%, vorzugsweise von mindestens 80% und insbesondere aller einander benachbarten beheizten Oberflächenbereiche, welche sich in Schritt c) in Kontakt mit Filmabschnitten befinden, die in Schritt e) verformt werden, zu den steuerbaren Heizelementen mindestens eines benachbarten beheizten Oberflächenbereichs in Schritt c) eine Temperaturdifferenz zwischen 10 und 60°C aufweisen.

5. Verfahren nach einem der vorherigen Ansprüche, wobei die steuerbaren Heizelemente der beheizten Oberflächenbereiche der Heizvorrichtung in Schritt c) eine Temperatur im Bereich von 40 bis 150°C, vorzugsweise von 60 bis 135°C aufweisen.

6. Verfahren nach einem der vorherigen Ansprüche, wobei die steuerbaren Heizelemente der Heizvorrichtung in den Bereichen, in welchen in Schritt c) der Flächenabschnitt des wasserlöslichen Films erwärmt wird, welcher den Randbereich der Aufnahmekammer(n) des Aufnahmebehälters bildet, in Schritt c) eine Temperatur im Bereich von 100 bis 150°C, vorzugsweise von 110 bis 135°C aufweist.

7. Verfahren nach einem der vorherigen Ansprüche, wobei die steuerbaren Heizelemente der Heizvorrichtung in den Bereichen, in welchen in Schritt c) der Flächenabschnitt des wasserlöslichen Films erwärmt wird, welcher den Bodenbereich der Aufnahmekammer(n) des Aufnahmebehälters bildet, in Schritt c) eine Temperatur im Bereich von 50 bis 90°C, vorzugsweise von 60 bis 85°C aufweist.

8. Verfahren nach einem der vorherigen Ansprüche, wobei der erste wasserlösliche Film in Schritt b) nur an einer Seite mit der Heizvorrichtung in Kontakt gebracht wird.

9. Verfahren nach einem der vorherigen Ansprüche, wobei der wasserlösliche Film in Schritt c) über einen Zeitraum von 0,5 bis 7 Sekunden, vorzugsweise von 1 bis 6 Sekunden und insbesondere von 2 bis 5 Sekunden erwärmt wird.

10. Verfahren nach einem der vorherigen Ansprüche, wobei sich der wasserlösliche Film in Schritt c) zwischen der Heizvorrichtung und der in Schritt e) eingesetzten Tiefziehmatrize befindet und der Abstand zwischen der Oberfläche der Heizvorrichtung und der Tiefziehmatrize weniger als 5 mm und insbesondere zwischen 0,1 und 2 mm, besonders bevorzugt zwischen 0,2 und 1 mm beträgt.

11. Verfahren nach einem der vorherigen Ansprüche, wobei der wasserlösliche Film in Schritt e) unter Ausbildung eines Aufnahmebehälters mit mindestens zwei, vorzugsweise mindestens drei und insbesondere mindestens vier Aufnahmekammern eingeformt wird.

12. Verfahren nach einem der vorherigen Ansprüche, wobei der Aufnahmebehälter in Schritt e) ein Füllvolumen von 1 bis 50 ml, vorzugsweise von 10 bis 40 ml und insbesondere von 13 bis 25 ml aufweist.

13. Verfahren nach einem der vorherigen Ansprüche, wobei der Aufnahmebehälter mindestens zwei, vorzugsweise mindestens drei und insbesondere mindestens vier Aufnahmekammern aufweist und das Verhältnis des Volumens der größten Aufnahmekammer zum Volumen der kleinsten Aufnahmekammer 4:1 bis 1:1, vorzugsweise 3:1 bis 1:1 beträgt.

## Claims

1. Method for producing a detergent portion unit with at least one filled receiving chamber surrounded by a water-soluble film, comprising the steps
a) transporting a first water-soluble film toward a heating device;
b) bringing the first water-soluble film into contact with the heating device;
c) heating the first water-soluble film by means of the heating device;
d) removing the contact between the first water-soluble film and the heating device;
e) forming the first heated water-soluble film into the cavities of a deep-drawing die located below the first water-soluble film to form a receiving container with at least one receiving chamber;
f) filling the at least one receiving chamber with a detergent;
g) if necessary, sealing and separating the filled receiving containers to form the detergent portion units;
wherein the surface of the heating device has adjacent heated surface areas which, in step c), are in contact with film sections which, in step e), are deformed to form a receiving container with at least one receiving chamber, and
- the heated surface areas are each heated by at least one separately controllable heating element,
- in step b), the heating device is lowered in the direction of the water-soluble film and the water-soluble film is brought into contact with the heating device by the action of a vacuum and held there,
- in step c), the water-soluble film is located between the heating device and the deep-drawing die used in step e), and the distance between the surface of the heating device and the deep-drawing die is less than 10 mm,
- the controllable heating elements have at least two adjacent heated surface areas in step c) with a temperature difference between 10 and 60°C.
- the temperature of the controllable heating elements is reduced to values below the temperature specified for step c) at a point in time after the water-soluble film has been heated in step c),
- in step d), the negative pressure between the heating device and the water-soluble film is removed and, at the same time or subsequently, the heating device is raised.

2. Method according to claim 1, wherein each heated surface area of the heating device has 1 to 8, preferably 1 to 6, in particular 1 to 4 separately controllable heating elements.

3. Method according to one of the previous claims, wherein the separately controllable heating elements of each heated surface area have a temperature difference of less than 5°C, preferably less than 2°C, relative to each other in step c).

4. Method according to one of the previous claims, wherein the controllable heating elements of at least 60%, preferably at least 80% and in particular all adjacent heated surface areas which are in contact in step c) with film sections which are deformed in step e), have a temperature difference of between 10 and 60°C relative to the controllable heating elements of at least one adjacent heated surface area in step c).

5. Method according to one of the previous claims, wherein the controllable heating elements of the heated surface areas of the heating device in step c) have a temperature in the range of 40 to 150°C, preferably of 60 to 135°C.

6. Method according to one of the previous claims, wherein the controllable heating elements of the heating device in the areas in which, in step c), the surface section of the water-soluble film forming the edge area of the receiving chamber(s) of the receiving container is heated, have a temperature in the range of 100 to 150°C, preferably from 110 to 135°C.

7. Method according to one of the previous claims, wherein the controllable heating elements of the heating device in the areas in which, in step c), the surface section of the water-soluble film which forms the bottom area of the receiving chamber(s) of the receiving container is heated, have a temperature in the range of 50 to 90°C, preferably from 60 to 85°C.

8. Method according to one of the previous claims, wherein the first water-soluble film is brought into contact with the heating device in step b) on only one side.

9. Method according to one of the previous claims, wherein the water-soluble film is heated in step c) for a period of 0.5 to 7 seconds, preferably 1 to 6 seconds and in particular 2 to 5 seconds.

10. Method according to one of the previous claims, wherein the water-soluble film in step c) is located between the heating device and the deep-drawing die used in step e) and the distance between the surface of the heating device and the deep-drawing die is less than 5 mm and, in particular, between 0.1 and 2 mm, particularly preferably between 0.2 and 1 mm.

11. Method according to one of the previous claims, wherein the water-soluble film is formed in step e) to form a receiving container with at least two, preferably at least three and in particular at least four receiving chambers.

12. Method according to one of the previous claims, wherein the receiving container in step e) has a filling volume of 1 to 50 ml, preferably 10 to 40 ml and in particular 13 to 25 ml.

13. Method according to one of the previous claims, wherein the receiving container has at least two, preferably at least three and in particular at least four receiving chambers and the ratio of the volume of the largest receiving chamber to the volume of the smallest receiving chamber is 4:1 to 1:1, preferably 3:1 to 1:1.

## Revendications

1. Procédé de fabrication d'une unité de dosage de détergent comprenant au moins une chambre de réception remplie et entourée d'un film hydrosoluble, comprenant les étapes suivantes
a) transport d'un premier film hydrosoluble vers un dispositif de chauffage;
b) mise en contact du premier film hydrosoluble avec le dispositif de chauffage;
c) chauffage du premier film hydrosoluble au moyen du dispositif de chauffage;
d) Suppression du contact entre le premier film hydrosoluble et le dispositif de chauffage;
e) moulage du premier film hydrosoluble chauffé dans les cavités d'une matrice d'emboutissage située sous le premier film hydrosoluble, afin de former un récipient de réception comportant au moins une chambre de réception;
f) remplissage de la au moins une chambre de réception avec un détergent;
g) le cas échéant, fermeture et séparation des récipients de réception remplis pour former l'unité de portion de détergent;
la surface du dispositif de chauffage comportant des zones chauffées adjacentes qui, à l'étape c), sont en contact avec des parties de film qui, à l'étape e), sont déformées pour former un récipient de réception comportant au moins une chambre de réception, et
- les zones de surface chauffées sont chacune chauffées par au moins un élément chauffant commandable séparément,
- à l'étape b), le dispositif de chauffage est abaissé en direction du film hydrosoluble et le film hydrosoluble est mis en contact avec le dispositif de chauffage sous l'effet d'une dépression et maintenu dans cette position,
- à l'étape c), le film hydrosoluble se trouve entre le dispositif de chauffage et la matrice d'emboutissage utilisée à l'étape e) et la distance entre la surface du dispositif de chauffage et la matrice d'emboutissage est inférieure à 10 mm,
- les éléments chauffants commandables présentent, dans l'étape c), une différence de température comprise entre 10 et 60 °C entre au moins deux zones de surface chauffées adjacentes.
- la température des éléments chauffants réglables est abaissée à une valeur inférieure à la température prévue pour l'étape c) à un moment situé après le réchauffement du film hydrosoluble dans l'étape c),
- à l'étape d), la dépression entre le dispositif de chauffage et le film hydrosoluble est supprimée et, simultanément ou ultérieurement, le dispositif de chauffage est relevé.

2. Procédé selon la revendication 1, dans lequel chaque zone de surface chauffée du dispositif de chauffage comporte 1 à 8, de préférence 1 à 6, en particulier 1 à 4 éléments chauffants commandables séparément.

3. Procédé selon l'une des revendications précédentes, dans lequel les éléments chauffants commandables séparément de chaque zone de surface chauffée présentent entre eux, à l'étape c), une différence de température inférieure à 5 °C, de préférence inférieure à 2 °C.

4. Procédé selon l'une des revendications précédentes, les éléments chauffants commandables d'au moins 60 %, de préférence d'au moins 80 %, et en particulier de toutes les zones de surface chauffées adjacentes qui, à l'étape c), sont en contact avec des sections de film qui sont déformées à l'étape e), présentent, par rapport aux éléments chauffants commandables d'au moins une zone de surface chauffée adjacente, une différence de température comprise entre 10 et 60 °C à l'étape c).

5. Procédé selon l'une des revendications précédentes, dans lequel les éléments chauffants réglables des zones de surface chauffées du dispositif de chauffage présentent, à l'étape c), une température comprise entre 40 et 150 °C, de préférence entre 60 et 135 °C.

6. Procédé selon l'une des revendications précédentes, dans lequel les éléments chauffants réglables du dispositif de chauffage présentent, dans les zones dans lesquelles, à l'étape c), la partie de surface du film soluble dans l'eau qui forme la zone périphérique de la ou des chambres de réception du récipient de réception est chauffée, à l'étape c), une température comprise entre 100 et 150 °C, de préférence de 110 à 135 °C.

7. Procédé selon l'une des revendications précédentes, dans lequel les éléments chauffants réglables du dispositif de chauffage, dans les zones où, à l'étape c), la partie de surface du film soluble dans l'eau qui forme la zone de fond de la ou des chambres de réception du récipient de réception est chauffée, présentent à l'étape c) une température comprise entre 50 et 90 °C, de préférence comprise entre 60 et 85 °C.

8. Procédé selon l'une des revendications précédentes, dans lequel le premier film hydrosoluble n'est mis en contact avec le dispositif de chauffage que d'un seul côté lors de l'étape b).

9. Procédé selon l'une des revendications précédentes, dans lequel le film soluble dans l'eau est chauffé à l'étape c) pendant une durée comprise entre 0,5 et 7 secondes, de préférence entre 1 et 6 secondes et en particulier entre 2 et 5 secondes.

10. Procédé selon l'une des revendications précédentes, dans lequel, à l'étape c), le film hydrosoluble se trouve entre le dispositif de chauffage et la matrice d'emboutissage utilisée à l'étape e) et la distance entre la surface du dispositif de chauffage et la matrice d'emboutissage est inférieure à 5 mm, en particulier comprise entre 0,1 et 2 mm, de préférence comprise entre 0,2 et 1 mm.

11. Procédé selon l'une des revendications précédentes, dans lequel le film hydrosoluble est moulé à l'étape e) pour former un récipient de réception comportant au moins deux, de préférence au moins trois et en particulier au moins quatre chambres de réception.

12. Procédé selon l'une des revendications précédentes, dans lequel le récipient de réception présente, à l'étape e), un volume de remplissage de 1 à 50 ml, de préférence de 10 à 40 ml et en particulier de 13 à 25 ml.

13. Procédé selon l'une des revendications précédentes, dans lequel le récipient de réception comporte au moins deux, de préférence au moins trois et en particulier au moins quatre chambres de réception et le rapport entre le volume de la plus grande chambre de réception et le volume de la plus petite chambre de réception est compris entre 4:1 et 1:1, de préférence entre 3:1 et 1:1.
